Europäisches Patentamt

European Patent Office

Office européen des brevets

(11) Veröffentlichungsnummer: **0 152 752**
**B1**

## (12) EUROPÄISCHE PATENTSCHRIFT

(45) Veröffentlichungstag der Patentschrift:
**24.08.88**

(21) Anmeldenummer: **85100302.0**

(22) Anmeldetag: **14.01.85**

(51) Int. Cl.⁴: **F 16 L  47/00**

(54) **Verbindung für faserverstärkte Kunststoffrohre.**

(30) Priorität: **20.02.84  CH 803/84**

(43) Veröffentlichungstag der Anmeldung:
**28.08.85 Patentblatt 85/35**

(45) Bekanntmachung des Hinweises auf die Patenterteilung:
**24.08.88 Patentblatt 88/34**

(84) Benannte Vertragsstaaten:
**AT BE CH DE FR GB IT LI LU NL SE**

(56) Entgegenhaltungen:
**GB - A - 1 232 938**
**GB - A - 1 313 242**
**GB - A - 1 329 364**

(73) Patentinhaber: **GEORG FISCHER**
**AKTIENGESELLSCHAFT, Mühlentalstrasse 105,**
**CH-8201 Schaffhausen (CH)**

(72) Erfinder: **Overath, Friedhelm, Kohlfirststrasse 13,**
**CH-8203 Schaffhausen (CH)**
Erfinder: **Saner, Remo, Bodenackerstrasse 487,**
**CH-4227 Büsserach (CH)**

## Beschreibung

Die Erfindung betrifft eine Verbindung von faserverstärkten Kunststoffrohren, wie sie im Oberbegriff von Anspruch 1 gekennzeichnet ist.

Für die Weiterleitung von Medien, insbesondere von aggressiven Medien in der chemischen Industrie, werden Rohrleitungen mit einem inneren Mantel aus einem thermoplastischen Material wie z.B. aus Polyäthylen, Polypropylen, Polyvinylchlorid usw. und einem äußeren Mantel aus einem faserverstärkten Laminat, wie z.B. gewickelte Glasfasern mit einem ungesättigten Polyesterharz oder Epoxydharz getränkt, verwendet. Der äußere Laminat-Mantel dient sowohl zur Verstärkung der Rohre, um Medien mit höheren Drücken weiterleiten zu können, als auch zur Aufnahme von äußeren Kräften, wie z.B. von Zugdruck oder Biegekräften auf die Rohrleitung.

Bei der Herstellung von Verbindungen zwischen den Rohren bzw. zwischen Rohren und Fittings wie z.B. Winkel, T-Stücke oder Reduktionen ist es wichtig, daß das Medium nicht mit dem äußeren Mantel in Berührung kommt und die äußeren Kräfte im wesentlichen durch den äußeren Mantel weitergeleitet werden.

Verbindungen für Kunststoffrohre sind zwar bekannt (z.B. DE-A-2707492, CH-A-555 504, GB-A-1232938), jedoch sind diese nicht für faserverstärkte Kunststoffrohre mit einem inneren und einem äußeren Mantel geeignet, wodurch sie auch nicht die vorgängig genannten Forderungen erfüllen können.

Durch die GB-A-1329364 ist eine Verbindung von faserverstärkten Kunststoffrohren der eingangs genannten Art bekannt geworden, bei welcher der innere Mantel dicht durch ein eingesetztes Verbindungsteil verbunden ist und der äußere Mantel aus einem Glasfaser-Laminat erst nachträglich auf die Verbindung aufgebracht wird. Eine derartige Verbindung ist nur mit großem Aufwand direkt an einer Baustelle erstellbar.

Aufgabe der vorliegenden Erfindung ist die Schaffung einer Verbindung für faserverstärkte Kunststoffrohrteile der eingangs genannten Art, welche bei der Leitungsverlegung an abgeschnittenen Rohren, auch an Baustellen, anbringbar ist und welche die genannten Voraussetzungen betreffend der Weiterleitung der Kräfte und der mit dem Durchflußmedium in Berührung kommenden Flächen erfüllt.

Erfindungsgemäß wird dies durch die kennzeichnenden Merkmale von Anspruch 1 gelöst. Besonders vorteilhafte Ausgestaltungen der Erfindung sind in den abhängigen Ansprüchen gekennzeichnet.

Durch die Merkmale von Anspruch 1 wird erreicht, daß die Kräfte formschlüssig durch die Halbschalen auf den äußeren Mantel der zu verbindenden Teile übertragen werden, wobei das Durchflußmedium nicht mit dem äußeren Mantel in Berührung kommt.

Durch die Verwendung von wellenförmig ausgebildeten Rillen bzw. Erhebungen werden Kerbwirkungen weitgehend vermieden.

Die zusätzliche Klebung bewirkt eine Sicherung gegen Lösen sowie durch das Ausfüllen eventuell vorhandener Hohlräume mit Klebstoff eine Verhinderung von Permeationsschäden. Die Verbindung ist direkt an der Montagestelle herstellbar, ohne daß eine Vorfertigung von Paßlängen erforderlich ist.

Durch entsprechende Wahl des thermoplastischen Materials für den inneren Mantel und den Abdeckring ist eine hohe chemische Beständigkeit der Verbindung gegeben.

Die Erfindung ist in den beiliegenden Zeichnungen beispielsweise dargestellt und nachfolgend beschrieben. Es zeigen:

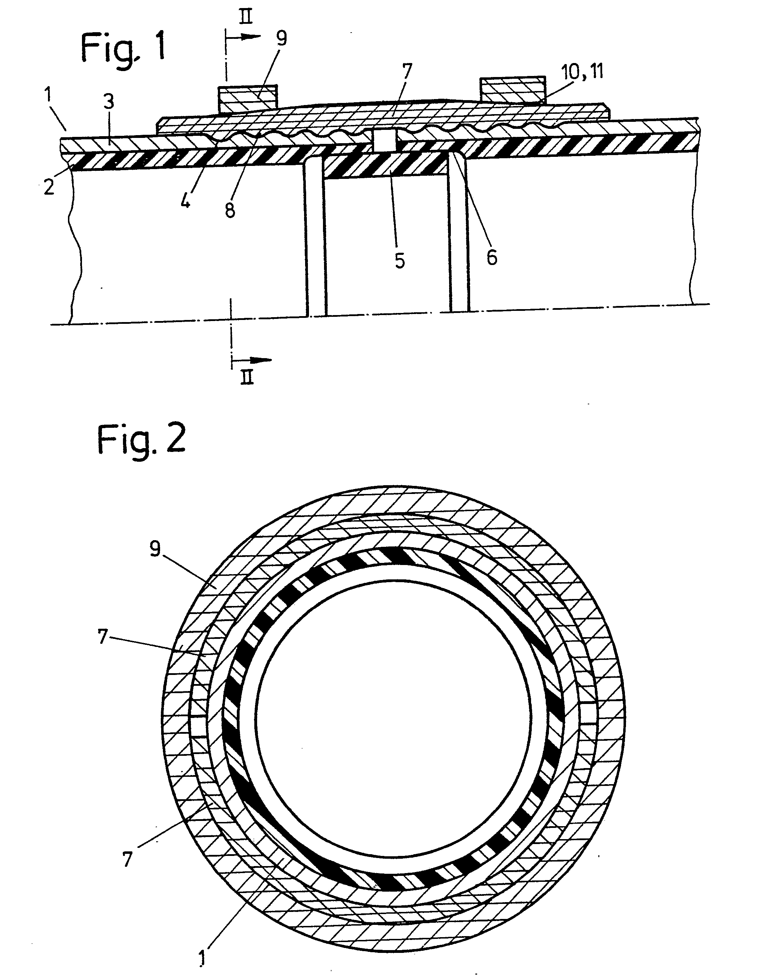

Fig. 1 einen Teillängsschnitt einer nicht lösbaren Verbindung für faserverstärkte Rohre und

Fig. 2 einen Schnitt entlang der Linie II–II von Fig. 1.

Die Figuren zeigen eine nicht lösbare Verbindung zwischen zwei Rohrenden 1, welche z.B. auch das rohrförmige Ende eines Fittings, wie z.B. ein Bogen, Winkel, T-Stück oder Reduktionsmuffe, sein kann. Das Rohr 1 weist einen inneren Mantel 2 aus einem thermoplastischen Material wie z.B. Polyäthylen, Polyvinylchlorid usw. und einen äußeren Mantel 3 auf, welcher aus einer mit Kunstharz getränkten Faserwicklung besteht. Vorzugsweise wird ein Laminat aus Glasfasern mit einem ungesättigten Polyesterharz oder Epoxydharz verwendet.

Der äußere Mantel wird auf fertig extrudierte Rohre bzw. vorgefertigte, z.B. gespritzte Fittings durch einen Wickelvorgang aufgebracht und ist mit dem inneren Mantel durch Adhäsion fest verbunden.

Das Ende jedes Rohres 1 ist mit umfangmäßig verlaufenden Rillen 4 versehen, welche vorzugsweise wellenförmig – d.h. mit im Querschnitt runden Rillen und abgerundeten Übergängen – ausgebildet sind. Diese Rillen 4 werden nach dem Abschneiden des Rohres auf die gewünschte Länge durch eine mechanische Bearbeitung angebracht.

Danach wird jeweils der innere Mantel 2 der beiden Rohrenden 1 mittels eines Rohrstutzens 5 durch Stoffschluß fest verbunden. Vorzugsweise wird der Rohrstutzen 5 jeweils mit dem inneren Mantel 2 mittels einer Schweiß- oder Klebeverbindung fest verbunden, wobei eine zentrische Verbindung der beiden Rohrenden 1 durch Anbringung je einer zu den Profilrillen 4 zentrischen Ausdrehung 6 gewährleistet ist. Für eine gute Schweißverbindung ist es erforderlich, daß das Material des Rohrstutzens 5 dem thermoplastischen Material des inneren Mantels 2 entspricht.

Für eine Zugkräfte aufnehmende feste Verbindung der Rohrenden 1 wird deren äußerer Mantel 3 formschlüssig durch zwei verspannbare Halbschalen 7 verbunden. Am Innenumfang der Halbschalen 7 sind wellenförmige Erhebungen 8 angeordnet, welche in den Rillen 4 des äußeren Mantels 3 liegend die formschlüssige Verbindung bilden.

Die Verspannung der beiden Halbschalen 7 gegen die Rohre 1 wird mittels von beiden Enden der Halbschalen 7 axial aufschiebbaren Spannringen 9 erreicht. Die Spannringe 9 weisen einen konischen Innenumfang 10 auf, wobei durch das axiale Aufschieben auf einen konischen Außenumfang 11 der Halbschalen 7 eine radiale Spannkraft entsteht.

Halbschalen 7 und Spannringe 9 sind ebenfalls aus einem Laminat – vorzugsweise aus Glasfasern und Kunstharz – hergestellt.

Vorteilhafterweise werden die Halbschalen 7 zusätzlich zu der formschlüssigen Verbindung noch mit einer Klebeverbindung mit den Rohren 1 dichtend verbunden.

Durch diese Verklebung und bzw. oder das Einschweißen bzw. Einkleben des Rohrstutzens 5 in den inneren Mantel entsteht eine nicht lösbare Verbindung.

Soll die Verbindung lösbar sein, wird der Rohrstutzen 5 durch Einstecken dicht mit dem inneren Mantel 2 verbunden, wobei dafür der Rohrstutzen 5 vorzugsweise aus einem Elastomer hergestellt ist.

Zur Versteifung und Verbesserung der Dichtwirkung kann im Rohrstutzen ein vorzugsweise metallischer Ring eingelegt sein.

**Patentansprüche**

1. Verbindung von faserverstärkten Kunststoffrohren, welche einen inneren Mantel (2) aus einem thermoplastischen Material und einen äußeren Mantel (3) aus einer mit Kunstharz getränkten Faserwicklung aufweisen, wobei am inneren Mantel der Rohrenden ein mit diesen dicht verbundener Rohrstutzen (5) angeordnet ist, dadurch gekennzeichnet, daß am äußeren Mantel (3) der beiden Rohrenden (1) Rillen (4) angeordnet sind, in welche entsprechend ausgebildete Erhebungen (8) von Halbschalen (7) eingreifen und eine formschlüssige Verbindung bilden, wobei die Halbschalen (7) mittels auf deren konischen Außenumfang (11) aufschiebbare, einen konischen Innenumfang (10) aufweisende Spannringe (9) verspannt sind und daß die formschlüssige Verbindung zusätzlich mit einer Klebeverbindung versehen ist.

2. Verbindung nach Anspruch 1, dadurch gekennzeichnet, daß die Rillen (4) bzw. Erhebungen (8) in Rohrlängsrichtung wellenförmig ausgebildet sind.

3. Verbindung nach einem der Ansprüche 1 bis 2, dadurch gekennzeichnet, daß die Halbschalen (7) aus mit Kunstharz getränkten Glasfasern bestehen.

4. Verbindung nach einem der Ansprüche 1 bis 3, dadurch gekennzeichnet, daß die Spannringe (9) aus mit Kunstharz getränkten Glasfasern bestehen.

5. Verbindung nach einem der Ansprüche 1 bis 4, dadurch gekennzeichnet, daß der Rohrstutzen (5) mit dem inneren Mantel (2) durch Schweißen oder Kleben verbunden ist und aus dem gleichen thermoplastischen Material besteht wie der innere Mantel (2).

6. Verbindung nach einem der Ansprüche 1 bis 4, dadurch gekennzeichnet, daß der Rohrstutzen (5) dichtend in den inneren Mantel (2) eingesteckt und aus einem Elastomer hergestellt ist.

**Claims**

1. Connection of fibre-reinforced plastics pipes which have an internal casing (2) of a thermoplastic material and an external casing (3) of a fibre wrapping set in plastic resin, wherein a pipe piece (5) is arranged at the internal casing of the pipe ends sealingly connected to them, characterised in that on the external casing (3) of the two pipe ends (1) grooves (4) are arranged into which correspondingly constructed elevations (8) of half shells (7) engage and form a positive connection, the half shells (7) being clamped by means of clamping rings (9) having a conical internal circumference (10) which can be moved on the conical outer circumference (11) of the half shells and in that the positive connection is additionally provided with an adhesive connection.

2. Connection according to claim 1, characterised in that the grooves (4) or elevations (8) are of corrugated construction in the longitudinal direction of the pipe.

3. Connection according to one of claims 1 to 2, characterised in that the half shells (7) are made of glass fibres set in plastic resin.

4. Connection according to one of claims 1 to 3, characterised in that the clamping rings (9) are made of glass fibres set in plastic resin.

5. Connection according to one of claims 1 to 4, characterised in that the pipe connecting piece (5) is joined to the internal casing (2) by welding or adhesion and consists of the same thermoplastic material as the internal casing (2).

6. Connection according to one of claims 1 to 4, characterised in that the pipe connecting piece (5) is inserted in sealed manner into the internal casing (2) and is made of an elastomer.

**Revendications**

1. Liaison de tubes en matière plastique renforcée par fibres, qui possèdent une enveloppe intérieure (2) en matériau thermoplastique et une enveloppe extérieure (3) constituée par un enroulement de fibres imprégné de résine synthétique, un tronçon de tube (5) étant disposé sur l'enveloppe intérieure des extrémités des tubes et relié de façon étanche à celles-ci, caractérisée en ce que des gorges (4) sont ménagées dans l'enveloppe extérieure (3) des deux extrémités (1) de tube, dans lesquelles pénètrent des saillies (8) de réalisation correspondante de demi-coques (7) et forment une liaison par complémentarité de forme, les demi-coques (7) étant serrées au moyen de bagues de serrage (9) possédant une surface intérieure (10) conique et pouvant être glissées sur la surface extérieure (11) conique des demi-coques, et que la liaison par complémentarité de forme est complétée par une liaison par collage.

2. Liaison selon la revendication 1, caractérisée en ce que les gorges (4) et les saillies (8) sont réalisées en forme d'ondulations dans le sens longitudinal du tube.

3. Liaison selon l'une quelconque des revendications 1 et 2, caractérisée en ce que les demi-coques (7) sont constituées par des fibres de verre imprégnées de résine synthétique.

4. Liaison selon l'une quelconque des revendications 1 à 3, caractérisée en ce que les bagues de serrage (9) sont constituées par des fibres de verre imprégnées de résine synthétique.

5. Liaison selon l'une quelconque des revendications 1 à 4, caractérisée en ce que le tronçon de tube (5) est relié à l'enveloppe intérieure (2) par soudure ou par collage et est constitué par le même matériau thermoplastique que l'enveloppe intérieure (2).

6. Liaison selon l'une quelconque des revendications 1 à 4, caractérisée en ce que le tronçon de tube (5) est inséré de façon étanche dans l'enveloppe intérieure (2) et est fabriqué à partir d'un élastomère.

Fig. 1

Fig. 2